Europäisches Patentamt

European Patent Office

Office européen des brevets

(11) Publication number: **0 458 027 A1**

## (12) EUROPEAN PATENT APPLICATION

(21) Application number: **91104256.2**

(22) Date of filing: **19.03.91**

(30) Priority: **21.05.90 JP 131523/90**

(43) Date of publication of application:
**27.11.91 Bulletin 91/48**

(84) Designated Contracting States:
**DE FR GB**

(71) Applicant: **PIONEER ELECTRONIC CORPORATION**
**No. 4-1, Meguro 1-chome**
**Meguro-ku Tokyo 153(JP)**

(51) Int. Cl.⁵: **G11B 7/085**

(72) Inventor: **Takahashi, Hiroyuki, c/o Tokorozawa Koujou**
**Pioneer Electronic Corp., 2610 Hanazono 4-chome**
**Tokorozawa-shi, Saitama-ken(JP)**

(74) Representative: **Sajda, Wolf E., Dipl.-Phys. et al**
**MEISSNER, BOLTE & PARTNER**
**Widenmayerstrasse 48 Postfach 86 06 24**
**W-8000 München 86(DE)**

(54) **Servo-system for a disk player.**

㊗ A servo system has a device (14, S2) for rendering a track-following system (16) inoperative. A tracking coil (28) of the track-following system (16) is energized to shift a pickup head (21) to a stopper (25), thereby restricting movement of the pickup head (21) in the radial direction of a CD (17) during an inoperative period.

# FIG. 1

## BACKGROUND OF THE INVENTION

The present invention relates to a servo system for a disk player such as a CD player, and more particularly to a servo system for following a track of a compact disk (CD) in the CD player wherein a pickup head provided in a pickup moves in a radial direction of the disk.

Information recorded on the disk is read by the pickup head of the pickup and converted into electric signals. Signals representing a focus error of a laser beam and a tracking error are fed to a focus servo and a track-following servo system.

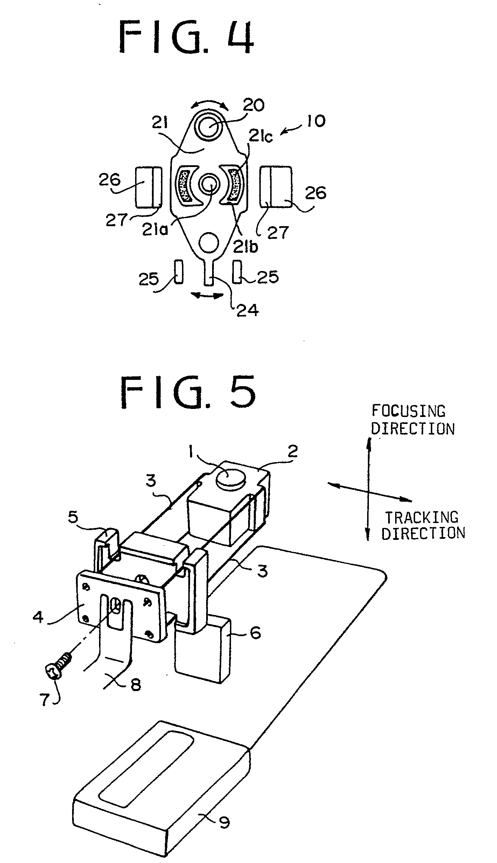

Fig. 5 shows a conventional optical pickup. The optical pickup comprises a pickup head 2, a printed circuit board 4, and a base plate 6. The pickup head 2 has an optical system 1 and a pair of coils (not shown). The pickup head 2 is suspended from the print circuit board 4 by four conductive wires 3 in the form of a cantilever. The base plate 6 is secured to the board 4 by a screw 7 through a plastic connecting member 5. The printed circuit board 4 is connected to a head substrate 9 with a flexible wiring plate 8.

When an intermediate piece of music on the CD should be reproduced, a track for the music must be detected.

In order to search a desired track on the disk, the number of tracks which exist between the present position of the pickup head and the desired track is calculated. A track-following servo is rendered inoperative and the pickup is radially moved with respect to the disk. When the pickup passes a track, a tracking error signal is produced. Accordingly, the number of the tracking error signal is counted. When the count coincides with the number of tracks, the pickup is stopped. Such a track search enables the pickup to easily and quickly reach a beginning position of the desired track.

In the above described conventional pickup, the pickup head is suspended by conductive wires in the form of a cantilever. Moreover, the track-following servo system is inoperative during the track searching operation so that the movement of the pickup head 2 in the radial direction of the disk is not restricted. Accordingly, a vibration due to the radial movement of the pickup, or an external force may cause the pickup head 2 to vibrate, rendering it impossible to accurately count the track.

More particularly, since a track pitch of the CD is very small (1,6 μm), even a small vibration may cause the pickup head to erroneously detect the tracks, thereby skipping the desired track. Thus, the track search operation must be repeated which is a time-consuming operation.

## SUMMARY OF THE INVENTION

The object of the present invention is to provide a track-following servo system where a rapid track search may be performed with a high accuracy.

According to the present invention, there is provided a servo system for an optical pickup head of a pickup, the system including a focus servo system for focusing an objective and a track-following servo system for following a track of a disk, comprising disabling means for rendering one of the focus servo system and the track-following system inoperative, restricting means for restricting movement of the pickup head in an operating direction of the disabled system during an inoperative period.

In an aspect of the invention, the disabled system is the track-following servo system, and the restricting means includes stoppers and means for energizing a tracking coil of the track-following servo system, for shifting the pickup head to one of the stoppers whereby a part of the pickup head is abutted on the stopper.

Other objects and features of this invention will become apparent from the following description with reference to the accompanying drawings.

## BRIEF DESCRIPTION OF THE DRAWINGS

Fig. 1 shows a block diagram of a servo system for a CD player according to the present invention;
Fig. 2 is a plan view of a pickup for the servo system;
Fig. 3 is a flowchart showing the operation of the servo system;
Fig. 4 is a plan view showing a modification of a pickup to which the present invention is applied; and
Fig. 5 is a perspective view showing a conventional pickup.

## DETAILED DESCRIPTION OF THE PREFERRED EMBODIMENT

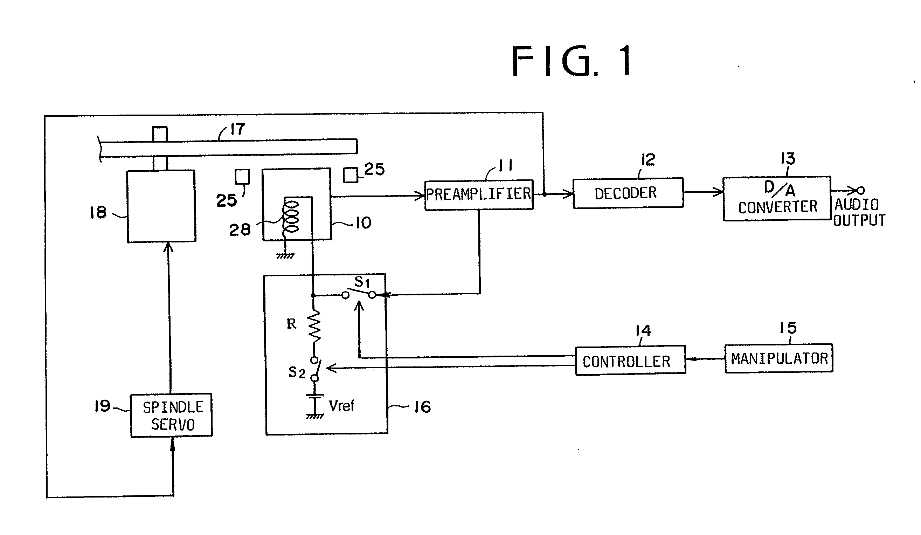

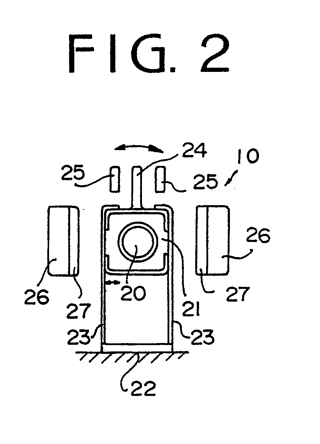

Referring to Fig. 1, a CD player has an optical pickup 10. As shown in Fig. 2, the optical pickup 10 according to the present invention comprises a pickup head 21 having an objective 20 and a suspension base 22. The pickup head 21 is suspended from the suspension base 22 by four conductive wires 23 in the form of a cantilever adjacent the pickup at opposite sides of the pickup head 21. A tracking coil 28 (Fig. 1) is provided adjacent the head 21 so as to follow the track in accordance with a tracking error signal. A pair of magnets 27 respectively mounted on yokes 26 are provided adjacent to opposite sides of the pickup head 21.

Referring to Fig. 1, the pickup 10 reads information recorded on a CD 17 and produces a signal corresponding to the information. The pickup further produces a control signal for producing the information signal, a focus error signal and a tracking error signal. The output signals of the pickup 10 is applied to a preamplifier 11 provided in the servo system, which amplifies the output signals of the pickup 10. The amplified information signal is fed to a decoder 12 wherein the signal is decoded to produce a digital audio signal. The digital audio signal is converted into an analog audio signal at a D/A converter 13. The servo system has a track-following servo 16 which has a tracking servo switch S1 connected with the preamplifier 11. The tracking servo 16 is further provided with a compulsory operation switch S2 which is connected to the tracking coil 28 through a resistor R. The switches S1 and S2 are actuated by a controller 14 which is operated by a manipulator 15.

A spindle motor 18 controlled by a spindle servo 19 is provided in the servo system to rotate the disk 17 at a predetermined speed.

As shown in Fig. 2, the pickup head 21 has a projection 24 which is provided between a pair of stoppers 25.

When the operation for searching the desired track is carried out, the tracking servo 16 is rendered inoperative and the tracking coil 28 is energized. Thus, the pickup head 21 is shifted in one of the directions shown by arrows in Fig. 2. The pickup head 21 is held at a position where the projection 24 abuts against one of the stoppers 25. The coefficient of friction between the projection 24 and the stopper 25 is so small as to allow the pickup head 21 to be shifted in a focusing direction.

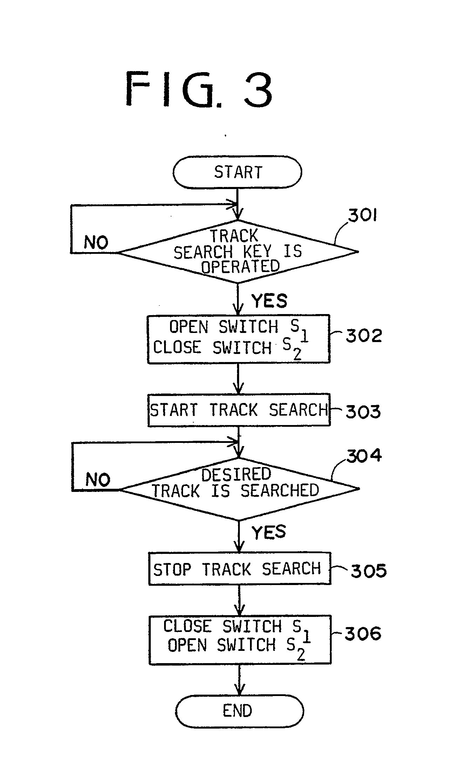

The operation of the system is described hereinafter with reference to the flowchart shown in Fig. 3.

In a step 301, it is determined whether a track search key in the manipulator 15 is operated to instruct the search of the desired track. When the track search key is operated, the tracking servo switch S1 is opened and the compulsory operation switch S2 is closed in a step 302. As a consequence, the tracking operation is stopped and the tracking coil 28 is energized. The pickup head 21 is attracted toward one of the magnets 27 accordingly and held at the position where the projection 24 engages the corresponding stopper 25.

In order to carry out the search of the desired track, the pickup 10 is moved in the radial direction of the disk 17 by a carriage (not shown) in a step 303. Since the pickup head 21 is prevented from vibrating in the radial direction of the disk 17, any search error caused by skipping a track is prevented so that an accurate search is conducted.

When the desired track is found (step 304), the track search operation is terminated at a step 305. The program goes to a step 306 so that the tracking servo switch S1 is closed and the compulsory operation switch S2 is opened. Thus, the coil 28 is de-energized so that the pickup head 21 returns to the normal position. Thereafter, the pickup head 21 reads the information recorded on the recording surface of the disk 17.

Fig. 4 shows another example of the pickup to which the present invention is applied. The same numerals as those in Fig. 2 designate the same parts as Fig. 2 so that the descriptions thereof are omitted.

The pickup head 21 is rotatably mounted on a rod 21a fixed to a base of the pickup 10. A pair of yokes 21c are provided in holes 21b formed in the pickup head 21. When the tracking coil 28 is energized, the pickup head 21 is rotated about the rod 21a until the projection 24 abuts against the stopper 25. Thus, the pickup head 21 is rendered immovable during the track search.

Accordingly, even if an external force causes the pickup to vibrate, the pickup head 21 is prevented from shifting in the tracking direction so that any search error, such as a skipping of the track, does not occur.

Although the pickup head 21 is held immovable when the tracking servo system 16 is inoperative in the above described embodiment, the system may be modified to hold the pickup 10 during the focusing operation as well. Furthermore, the pickup 10 may be held upon the start of rough servo operation.

The present invention may be applied to other disk reproducing system, for example, a laser disk (LD), optical or video disk player.

From the foregoing it will be understood that the present invention provides a track-following servo system, wherein a skipping track is prevented so that the desired track can be accurately searched. Thus, a rapid track search is performed.

While the presently preferred embodiments of the present invention have been shown and described, it is to be understood that these disclosures are for the purpose of illustration and that various changes and modifications may be made without departing from the scope of the invention.

## Claims

1. A servo system for an optical pickup head (21) of a pickup (10), the system including a focus servo system for focusing an objective (10) and a track-following servo system (16) for following a track of a disk (17), comprising:
   - means for rendering one of the focus servo system (10-13) and the track-following servo system (16) inoperative; and

- restricting means (24, 25) for restricting a movement of the pickup head (21) in a control direction of the inoperative servo system during an inoperative period.

2. The servo system according to claim 1, wherein the inoperative servo system is the track-following servo system (16).

3. The servo system according to claim 1 or 2, wherein the restricting means (24, 25) includes stoppers (25) and means (14, S2) for energizing a tracking coil (28) of the track-following servo system (16) for shifting the pickup head (21) to one of the stoppers (25), whereby a part (24) of the pickup head (21) is abutted on the stopper (25).

# FIG. 1

EP 0 458 027 A1

# FIG. 2

# FIG. 3

```
         ┌──────────────┐
         │    START     │
         └──────┬───────┘
                │
     ┌──────────▼──────────┐
NO ◄─┤       TRACK         │──── 301
     │  SEARCH KEY IS      │
     │     OPERATED        │
     └──────────┬──────────┘
              YES
                │
     ┌──────────▼──────────┐
     │ OPEN SWITCH S₁      │──── 302
     │ CLOSE SWITCH S₂     │
     └──────────┬──────────┘
                │
     ┌──────────▼──────────┐
     │ START TRACK SEARCH  │──── 303
     └──────────┬──────────┘
                │
     ┌──────────▼──────────┐
NO ◄─┤     DESIRED         │──── 304
     │  TRACK IS SEARCHED  │
     └──────────┬──────────┘
              YES
                │
     ┌──────────▼──────────┐
     │ STOP TRACK SEARCH   │──── 305
     └──────────┬──────────┘
                │
     ┌──────────▼──────────┐
     │ CLOSE SWITCH S₁     │──── 306
     │ OPEN SWITCH S₂      │
     └──────────┬──────────┘
                │
         ┌──────▼───────┐
         │     END      │
         └──────────────┘
```

- $301$ — TRACK SEARCH KEY IS OPERATED
- $302$ — OPEN SWITCH $S_1$ / CLOSE SWITCH $S_2$
- $303$ — START TRACK SEARCH
- $304$ — DESIRED TRACK IS SEARCHED
- $305$ — STOP TRACK SEARCH
- $306$ — CLOSE SWITCH $S_1$ / OPEN SWITCH $S_2$

# FIG. 4

# FIG. 5

FOCUSING
DIRECTION

TRACKING
DIRECTION

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 302 666 (CANON K.K.) * column 3, line 38 - column 4, line 10 * * column 10, lines 10 - 30 * * column 12, line 30 - column 36; claim 1; figures 3, 5, 7 * | 1,2 | G 11 B 7/085 |
| X | PATENT ABSTRACTS OF JAPAN vol. 12, no. 125 (P-691)(2972) 19 April 1988, & JP-A-62 250525 (KYOCERA CORP) 31 October 1987, * the whole document * | 3 | |
| X | PATENT ABSTRACTS OF JAPAN vol. 9, no. 199 (P-380)(1922) 16 August 1985, & JP-A-60 063739 (CANON K.K.) 12 April 1985, * the whole document * | 3 | |
| X | DE-A-3 626 029 (OLYMPUS OPTICAL CO) * claim 1; figures 1-3 * | 1,2 | |

TECHNICAL FIELDS SEARCHED (Int. Cl.5)

G 11 B

The present search report has been drawn up for all claims

| Place of search | Date of completion of search | Examiner |
|---|---|---|
| Berlin | 05 September 91 | BERNAS Y.N.E. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document